# EUROPÄISCHE PATENTSCHRIFT

(11) **EP 1 387 954 B1**
(45) Veröffentlichungstag und Bekanntmachung des Hinweises auf die Patenterteilung: **23.07.2008**
(21) Anmeldenummer: 02743038.8
(22) Anmeldetag: 16.05.2002
(51) Int. Cl.: F03D 3/06, F03D 7/06

(54) **VERTIKALACHS-WINDTURBINE**
WIND TURBINE COMPRISING A VERTICAL AXIS
EOLIENNE A AXE VERTICAL

(30) Priorität: 16.05.2001 DE 10125299
(43) Veröffentlichungstag der Anmeldung: 11.02.2004
(73) Patentinhaber: Schulze, Lutz, 13503 Berlin (DE)
(72) Erfinder: Schulze, Lutz, 13503 Berlin (DE)
(74) Vertreter: Hengelhaupt, Jürgen
(86) Internationale Anmeldenummer: PCT/EP2002/005434
(87) Internationale Veröffentlichungsnummer: WO 2002/093006

(56) Entgegenhaltungen:
- DE-A- 2 948 060
- DE-A- 3 517 752
- DE-A- 3 626 917
- DE-A- 3 805 370
- DE-U- 9 012 769
- FR-A- 2 768 187
- US-A- 4 087 202
- US-A- 4 525 124
- US-A- 4 624 624
- US-A- 4 718 821

## Beschreibung

Die Erfindung betrifft eine Vertikalachs- Windturbine mit mindestens einem Rotorblatt mit tragflügelartigem Querschnitt.

Windturbinen mit vertikaler Achse haben gegenüber solchen mit horizontaler Achse den Vorteil, dass keine Notwendigkeit zur Verstellung des Rotors in die gerade vorherrschende Windrichtung erfolgen muss. Die Rotorblätter weisen einen gleichbleibenden Querschnitt ohne Verwindung auf und können an mehreren Punkten gehalten werden. Trotzdem werden Horizontalachs-Windturbinen bisher bevorzugt, da sie einen etwas höheren Wirkungsgrad haben und einen höheren ausnutzbaren Bereich der Windgeschwindigkeit zulassen, während Vertikalachs-Windturbinden außerhalb eines engen Bereichs der Schnelllaufzahl in ihrer Leistung schnell abfallen. Außerdem stellt der Anlauf von Vertikalachs-Windturbinen ein Problem dar. Es sind deshalb bereits große Anstrengungen unternommen worden, um sowohl die Anlaufprobleme bei Vertikalachs-Windturbinen zu lösen als auch die Steuerbarkeit der Rotorblätter zu ermöglichen.

Rotoren mit Rotorblättern, deren Anstellwinkel gegenüber ihren Tragstangen während jeden Umlaufs durch eine Steuereinrichtung verstellt werden können, wie sie z.B. in DE-OS 43 05 600 vorgeschlagen wurde, haben sich indessen auf Grund der sehr komplizierten Mechanik und des hohen Verschleißes der nötigen Lager nicht bewährt.

Nach der DE-OS 36 26 917, oder FR-A-2 768 187 wird dagegen auf einen Verstellmechanismus verzichtet. Der Anlauf der Turbine soll nach diesem Vorschlag dadurch erleichtert werden, dass an den Außenflächen der Rotorblätter Stauflächen ausgebildet sind. Damit ergeben sich, wenn wirksame Stauflächen entstehen sollen, komplizierte Blattformen, die andererseits Verwirbelungen hervorrufen und damit wiederum den Wirkungsgrad der Turbine begrenzen. Die Lösung lässt auch die bisher üblichen Querschnittsformen der Rotorblätter erkennen, wenn man von der Staufläche absieht sowie die Lage der Rotorblätter am Rotorgestänge. Sie haben einen tragflügelartigen Querschnitt und sind entweder achsparallel oder im Winkel zur Rotorachse angeordnet. Sie können auch eine nach außen gerichtete V-Form oder, als Darrieus-Rotor bekannt, eine nach außen gebogene Form (Schneebesenform) aufweisen. In jedem Fall stehen die Rotorblätter in radialer Ansicht gesehen aufrecht.

Der Erfindung liegt die Aufgabe zu Grunde, eine Vertikalachs-Windturbine anzugeben, die mit hoher Energieausbeute arbeitet. Außerdem soll sie selbst anlaufen können und gegebenenfalls mit einfachen Mitteln steuerbar sein.

Erfindungsgemäß wird die Aufgabe gelöst durch die Merkmale des Anspruches 1. Zweckmäßige Ausgestaltungen sind Gegenstand der Unteransprüche.

Danach sind das oder die Rotorblätter in Laufrichtung so abgebogen oder abgeknickt, dass mindestens ein Ende des Rotorblattes gegenüber einem mittleren Bereich des Rotorblattes in Laufrichtung zurückgesetzt ist. Die Abbiegung bzw. Abknickung kann bogenförmig oder V-förmig sein oder kann mehrere Knickstellen aufweisen. Sie ist bevorzugt asymmetrisch, wobei es sich als vorteilhaft erwiesen hat, wenn sich insgesamt eine Form ergibt, bei der der Scheitel- oder Hauptknickpunkt in vertikaler Richtung oberhalb der horizontalen Schwerpunktebene des Rotorblattes liegt.

In vorteilhafter Weise können die Rotorblätter außerdem so gestaltet sein, dass das Rotorblatt an mindestens einer Stelle entlang einer das Rotorblatt schneidenden Senkrechten in Richtung auf die Abtriebsachse der Vertikalachs-Windturbine abgeknickt ist. Die sich so ergebenden Teile des Rotorblattes können dann Sekanten oder Tangenten des Umlaufkreises des Rotorblattes bilden. Nach einer Variante der Erfindung kann die Abknickung durch eine scharnierartige Verbindung von Teilen des Rotorblattes und einen Verstellmechanismus veränderbar sein, so dass die Drehzahlverstellung oder das Abbremsen der Windturbine zusätzlich auch mit Hilfe dieser Winkelverstellung möglich ist.

Statt einer Abknickung kann das Rotorblatt auch kontinuierlich in bezug auf die Abtriebsachse der Vertikalachs-Windturbine konkav abgebogen sein. Durch diese zusätzliche Abknickung oder Abbiegung erhöht sich der ausnutzbare Bereich der Windgeschwindigkeit.

Die erfindungsgemäße Rotorblattgestaltung hat den Vorteil, dass die Tangentialkraft, die sonst für jedes Rotorblatt bei jedem Umlauf zwei mal auf null geht, auch an den Punkten des Anströmwechsels zu einem Mindestwert erhalten bleibt. Der Luftwiderstand wird insgesamt niedriger. Auch die radialen Strukturbelastungen bei den Anströmwechseln werden verringert. Durch die aerodynamischen Wirkungen und die Kräfteverläufe ist eine erheblich höhere Leistung des Rotors zu gewinnen.

Zusätzlich können ein oder mehrere Rotorblätter um eine imaginäre Achse, die das Rotorblatt an zwei Stellen schneidet, an denen es an einem Gestänge befestigt ist, drehbar angeordnet sein, so dass sich ihr Anstellwinkel individuell verstellen lässt. Eine zyklische Rotorblattverstellung ist dagegen nicht vorgesehen. Durch die Blattverstellung mindestens eines Rotorblattes wird das selbstständige Anlaufen des Rotors ermöglicht. Der in der Anlaufphase bisher vorhandene Bremsbereich ist dadurch nicht mehr wirksam.

Im Betriebsbereich können durch die Verstellung Drehzahl und Leistungsabgabe gesteuert werden. Durch die erfindungsgemäße Blattform und die Verstellmöglichkeit wird der Bereich der Schnelllaufzahl, in dem die Windturbine unter Leistungsabgabe betrieben werden kann, wesentlich erweitert. Auch eine Sturmabschaltung ist durch die Verstellmöglichkeit gegeben, indem die Rotorblätter lose in den Wind gestellt werden (Fahnenstellung).

In vorteilhafter Weise können die Rotorblätter aus mehreren Teilen (Module) zusammengesetzt werden, die sich kostengünstig im Strangpressverfahren herstellen lassen. Das Auftriebsprofil ist vorzugsweise symmetrisch, könnte aber, wie in der Fachliteratur bereits beschrieben wurde, auch unsymmetrisch sein. Die Rotorblattmodule können auch aus einem inneren Tragholm und außen angebrachten Auftriebsprofilen aus Kunststoff aufgebaut werden.

Der Rotor kann auf ein einstufiges Getriebe und einen Generator oder auch direkt auf einen getriebelosen Generator arbeiten. Auch die mehrfache Anordnung von Generatoren bietet sich an, um bei unterschiedlich starkem Wind mit veränderter Leistungsabgabe zu arbeiten und so auch den Teillastbereich (ca. 3 - 15 m/s) Windgeschwindigkeit voll zu nutzen. Dabei können die Generatoren verschiedene Nennleistungen aufweisen, um einen breiten Bereich der Windgeschwindigkeit ausnutzen zu können.

Die Erfindung soll nachstehend anhand eines Ausführungsbeispiels näher erläutert werden. In den zugehörigen Zeichnungen zeigen:
- Fig. 1: eine Darstellung einer Vertikalachs-Windkraftanlage nach der Erfindung,
- Fig. 2: ein Rotorblatt nach der Erfindung in Seitenansicht,
- Fig. 3: ein Rotorblatt nach der Erfindung in Draufsicht,
- Fig. 4: den Kräfteverlauf bisher bekannter Rotorblätter im Bereich des Anströmwechsels und
- Fig. 5: den Kräfteverlauf eines Rotorblattes nach der Erfindung im Bereich des Anströmwechsels.

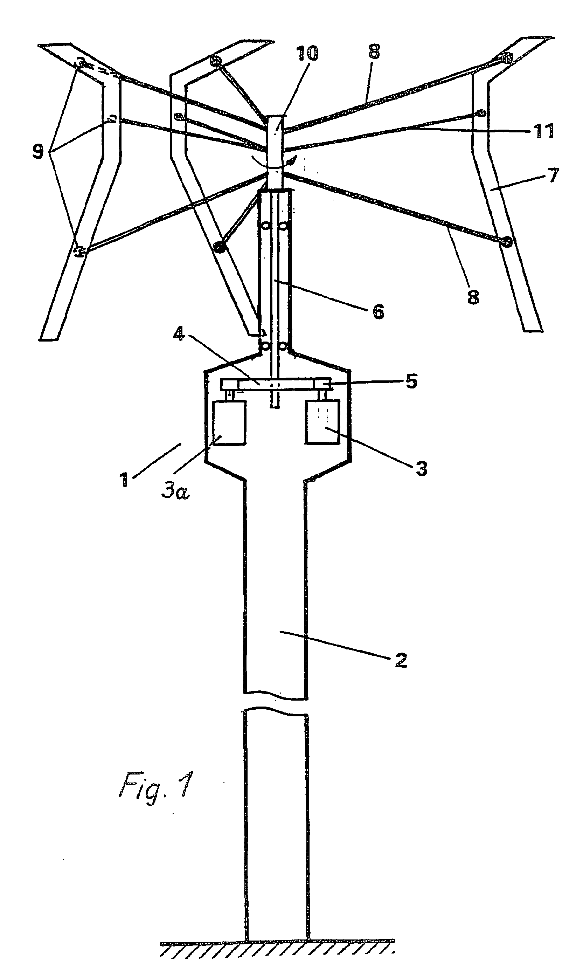

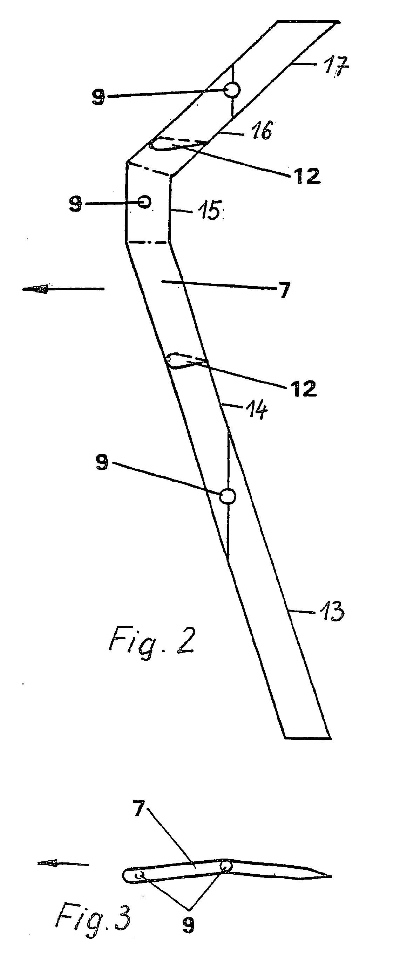

Fig. 1 zeigt eine Vertikalachs-Windkraftanlage 1 für den Netzparallelbetrieb. Der Rotor ist aus drei gleichen, mit der Spitze in Laufrichtung drehenden Rotorblättern 7 aufgebaut. Die Rotorblätter 7 werden von einem Traggestänge 8 aufgenommen und sind mit einer Abtriebswelle 10 verbunden. Wie insbesondere aus Fig. 2 ersichtlich ist, bilden die Rotorblätter 7 die obere Hälfte eines gedachten asymmetrischen Trapezes. Der obere, über dem Hauptknickpunkt liegende Teil des Rotorblattes 7 hat dabei gegenüber der Senkrechten einen Winkel etwa zwischen 30° und 45°, der untere Teil einen Winkel etwa zwischen 15° und 30°.

Wie Fig. 3 zeigt, sind die Rotorblätter 7, in der Draufsicht gesehen, entlang von Senkrechten, die durch Aufhängungen an Gelenkpunkten 9 gehen, etwa so abgewinkelt, dass sie sich tangential an den Umlaufkreis der Rotorblätter 7 anlegen.

Die Rotorblätter 7 haben, von der letztgenannten Abwinklung abgesehen, ein symmetrisches Profil 12 mit gleichbleibendem Querschnitt. Sie sind jeweils aus fünf Modulen 13 - 17 aufgebaut die miteinander fest, z.B. durch Schweißen, verbunden sind. Die Module 13 - 17 bestehen aus einem inneren Tragholm aus einem Aluminiumprofil und Kunststoff-Profilschalen, die im Strangpressverfahren hergestellt werden können. Die Rotorblätter 7 sind an den Gelenkpunkten 9 beweglich mit dem Traggestänge 8 verbunden. Zwischen der Spitze jedes Rotorblattes 7 und einem zentralen Wellenanschluss ist eine zusätzliche Steuer- und Haltestange 11 angeordnet. Die zentrale Verbindungsstelle mit einer Abtriebswelle 10, die die Abtriebskräfte aufnimmt, ist aerodynamisch günstig ausgeführt. Der in einem freistehenden Turm 2 gelagerte Bereich 6 der Abtriebswelle 10 wird bis unterhalb des Rotors geführt und dort an die Zahnräder eines Getriebes angekoppelt. Hierbei handelt es sich um ein einstufiges Getriebe mit einem großen angetriebenen Zahnring 4 und entsprechend kleinen Ritzeln 5. Das Getriebe arbeitet auf zwei Generatoren 3, 3a. Der freistehende Turm 2 besitzt keine Abspannung.

In der Anlaufphase werden die Rotorblätter 7 mit Hilfe der Steuer- und Haltestange 11 je nach ihrer momentanen Position jedes für sich so verstellt, dass jedes einen optimalen Anströmwinkel aufweist. Während des Hochlaufens wird die Verstellung immer weiter zurückgenommen. Bei Nenndrehzahl stehen die Rotorblätter 7 in tangentialer bis einige Grad (maximal ca. 10°) nach innen geneigter Stellung zum Umlaufkreis. Die Leistungs- und Drehzahlregelung erfolgt durch entsprechende Einstellung des Anströmwinkels.

Zur Sturmabschaltung werden die Rotorblätter 7 in Fahnenstellung gedreht.

Im Teillastbereich stellt die Steuerung den Rotor auf die maximale Leistung ein. Bei geringer Windgeschwindigkeit wird die Anlage mit einem Generator 3 betrieben, der zweite Generator 3a wird bei höheren Windgeschwindigkeiten zugeschaltet. Beide Generatoren 3, 3a können unterschiedliche Nennleistung aufweisen, um die Anlage insgesamt in einem breiten Bereich der möglichen Windgeschwindigkeiten steuern zu können.

Durch die Erfindung ist es möglich, die prinzipiellen Vorteile der Vertikalachs-Windturbinen konkurrenzfähig zum Einsatz zu bringen. Die Vorteile derartiger Windkraftanlagen, die Windrichtungsunabhängigkeit und damit der Wegfall der Windnachführungseinrichtung, die einfache und billige Herstellung der Rotorblätter und die kostengünstige und verlustarme Getriebekonstruktion kommen voll zum Tragen. Die hohe Betriebssicherheit und der geringe Wartungsaufwand durch die mehrfache Blattaufhängung kommen hinzu. Damit ist eine höhere Wirtschaftlichkeit der Windenergienutzung als bisher zu erreichen. Mit geringem Aufwand ist die Anpassung der Anlage an Küsten- und Binnenlandstandorte möglich.

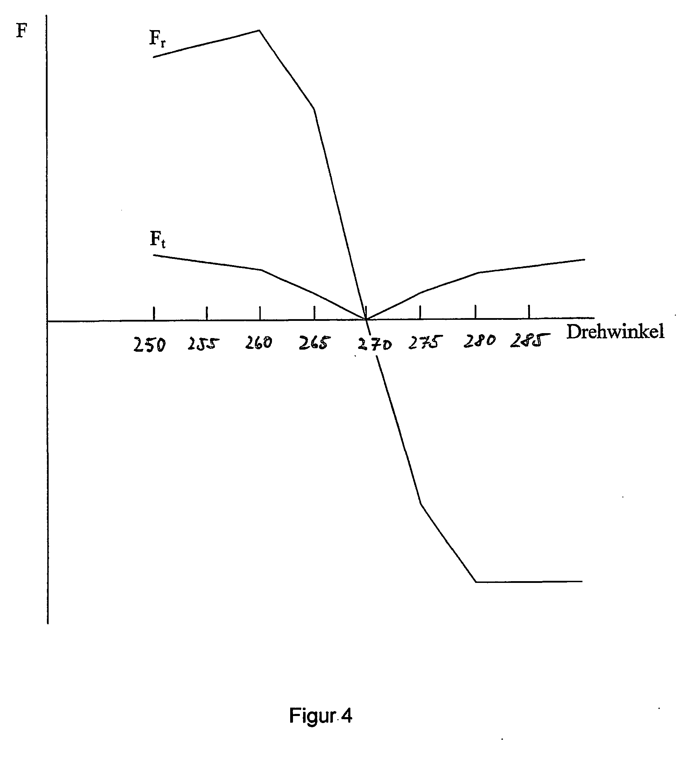

Fig. 4 zeigt den Kräfteverlauf eines üblichen Rotorblattes im Bereich eines Anströmwechsels, das heißt, wenn das Rotorblatt sich parallel zur Windrichtung stellt (90°, 270°). Aufgezeigt ist die Radialkraft Fr und die Tangentialkraft Ft. Die die Drehung des Rotors bewirkende Tangentialkraft Ft sinkt bei einem Winkel von 90° auf null, um darauf wieder anzusteigen. Sie kann beim Anlauf sogar in den negativen Bereich kommen, das heißt als Bremskraft wirken. Die die Rotorblätter radial belastende Kraft Fr erfährt bei 90° einen Nulldurchgang mit hohem Anstiegswinkel, es tritt also ein abrupter Lastwechsel vom Zug- in den Druckbereich auf.

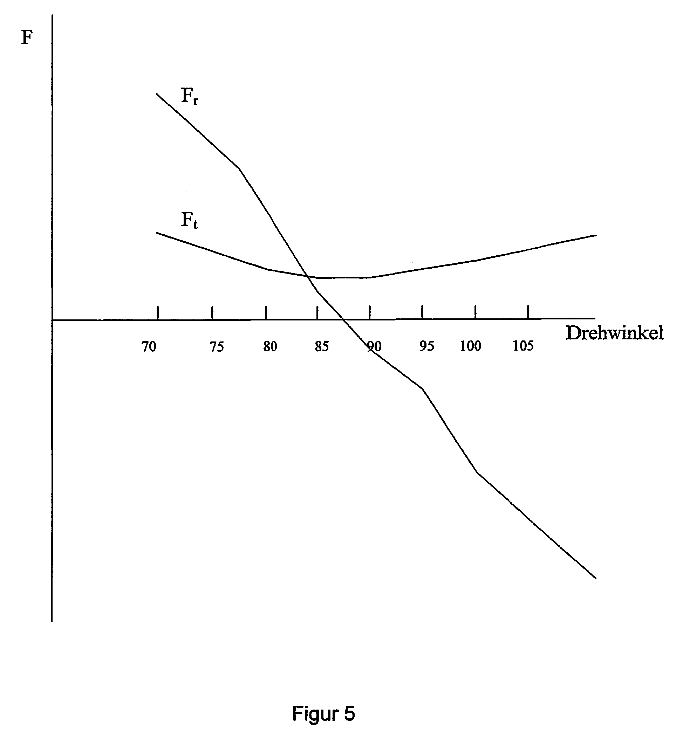

Fig. 5 zeigt dagegen den Kräfteverlauf an einem erfinderischen Rotorblatt. Die Tangentialkraft Ft sinkt im Bereich des Anströmwechsels nicht auf null ab. Die Schwankung der Tangentialkraft Ft entlang des Umlaufs wird so vergleichmäßigt. Außerdem tritt auch eine Verringerung der radialen Strukturbelastungen auf, da der Übergang vom Druck- in den Zugbereich wesentlich langsamer verläuft.

### Bezugszeichenliste

- 1: Vertikalachs-Windkraftanlage
- 2: Turm
- 3, 3a: Generatoren
- 4: Zahnring
- 5: Ritzel
- 6: Bereich (der Abtriebswelle)
- 7: Rotorblätter
- 8: Traggestänge
- 9: Gelenkpunkte
- 10: Abtriebswelle
- 11: Steuer- und Haltestange
- 12: Profil

## Patentansprüche

1. Vertikalachs-Windturbine mit mindestens einem Rotorblatt (7) mit tragflügelartigem Querschnitt, bei dem das oder die Rotorblätter (7) in Laufrichtung so abgebogen oder abgeknickt sind, dass mindestens ein Ende des Rotorblattes (7) gegenüber einem mittleren Bereich des Rotorblattes (7) in Laufrichtung zurückgesetzt ist,
**dadurch gekennzeichnet, dass**
das Rotorblatt (7) entlang seiner Längserstreckung mindestens einmal V-förmig abgeknickt ist.

2. Vertikalachs-Windturbine nach Anspruch 1,
**dadurch gekennzeichnet, dass**
die Abbiegung oder Abknickung entlang der Längserstreckung des Rotorblattes (7) asymmetrisch ist.

3. Vertikalachs-Windturbine nach Anspruch 1 oder 2,
**dadurch gekennzeichnet, dass**
der Scheitel- oder Hauptknickpunkt in vertikaler Richtung oberhalb der horizontalen Schwerpunktebene des Rotorblattes (7) liegt.

4. Vertikalachs-Windturbine nach einem der vorhergehenden Ansprüche,
**dadurch gekennzeichnet, dass**
das Rotorblatt (7) an mindestens einer Stelle entlang einer das Rotorblatt (7) schneidenden Senkrechten in Richtung auf die Abtriebsachse (10) der Vertikalachs-Windturbine abgeknickt ist.

5. Vertikalachs-Windturbine nach Anspruch 4,
**dadurch gekennzeichnet, dass**
die Abknickung durch eine scharnierartige Verbindung von Teilen des Rotorblattes (7) und einen Verstellmechanismus veränderbar ist.

6. Vertikalachs-Windturbine nach einem der Ansprüche 1 bis 3,
**dadurch gekennzeichnet, dass**
das Rotorblatt (7) mindestens in einem Teilbereich in bezug auf die Abtriebsachse (10) der Vertikalachs-Windturbine konkav gebogen ist.

7. Vertikalachs-Windturbine nach einem der vorhergehenden Ansprüche,
**dadurch gekennzeichnet, dass**
der Anstellwinkel mindestens eines Rotorblattes (7) gegenüber seinem Traggestänge (8) mittels einer Steuer- und Haltestange (11) verstellbar ist.

8. Vertikalachs-Windturbine nach einem der vorhergehenden Ansprüche,
**dadurch gekennzeichnet, dass**
das Rotorblatt (7) aus mehreren Teilen modulartig zusammengesetzt ist.

9. Vertikalachs-Windturbine nach Anspruch 8,
**dadurch gekennzeichnet, dass**
die modulartigen Teile aus kompakten Auftriebsprofilen bestehen.

10. Vertikalachs-Windturbine nach einem der Ansprüche 1 bis 7,
**dadurch gekennzeichnet, dass**
das Rotorblatt (7) aus einem inneren Tragholm und an diesem angebrachten äußeren Auftriebsprofilen besteht.

11. Vertikalachs-Windturbine nach einem der vorhergehenden Ansprüche,
**dadurch gekennzeichnet, dass**
sie auf ein einstufiges Getriebe arbeitet.

12. Vertikalachs-Windturbine nach einem der vorhergehenden Ansprüche,
**dadurch gekennzeichnet, dass**
sie auf einen getriebelosen Generator arbeitet.

## Claims

1. A vertical axis wind turbine with at least one rotor blade (7) with an airfoil-like cross-section, the rotor blade or blades (7) being bent or angled in the direction of rotation in such a way that at least one end of the rotor blade (7) is set back in relation to a central region of the rotor blade (7) in the direction of rotation,
**characterized in that**
the rotor blade (7) is angled at least once in a V shape along its longitudinal extension.

2. The vertical axis wind turbine according to claim 1,
**characterized in that**
the bending or angling along the longitudinal extension of the rotor blade (7) is asymmetric.

3. The vertical axis wind turbine according to claim 1 or 2,
**characterized in that**
the vertex or main angular point lies above the horizontal center of gravity plane of the rotor blade (7) in the vertical direction.

4. The vertical axis wind turbine according to one of the previous claims,
**characterized in that**
the rotor blade (7) is angled towards the driven shaft (10) of the vertical axis wind turbine at at least one point along a perpendicular intersecting the rotor blade (7).

5. The vertical axis wind turbine according to claim 4,
**characterized in that**
the angling is modifiable by virtue of a hinge-like connection of parts of the rotor blade (7) and an adjustment mechanism.

6. The vertical axis wind turbine according to one of claims 1 to 3,
**characterized in that**
the rotor blade (7) is bent concavely with respect to the driven shaft (10) of the vertical axis wind turbine in at least one portion.

7. The vertical axis wind turbine according to one of the previous claims,
**characterized in that**
the angle of attack of at least one rotor blade (7) in relation to its supporting rods (8) is adjustable by means of a control and holding rod (11).

8. The vertical axis wind turbine according to one of the previous claims,
**characterized in that**
the rotor blade (7) is composed of several parts in a modular manner.

9. The vertical axis wind turbine according to claim 8,
**characterized in that**
the modular parts consist of compact lift profiles.

10. The vertical axis wind turbine according to one of claims 1 to 7,
**characterized in that**
the rotor blade (7) consists of an inner load-carrying spar and outer lift profiles fixed thereto.

11. The vertical axis wind turbine according to one of the previous claims,
**characterized in that**
it works on a single-stage gearing.

12. The vertical axis wind turbine according to one of the previous claims,
**characterized in that**
it works on a gearless generator.

## Revendications

1. Eolienne à axe vertical comportant au moins une pale (7) de rotor présentant une section transversale aérodynamique, dans laquelle la pale (7), ou les pales (7), de rotor est/sont recourbée/s ou pliée/s dans le sens de déplacement de telle manière qu'au moins une extrémité de la pale (7) de rotor est en retrait, dans le sens de déplacement, par rapport à une zone centrale de la pale (7) de rotor,
**caractérisée en ce que**
la pale (7) de rotor est pliée au moins une fois en V le long de son extension longitudinale.

2. Eolienne à axe vertical selon la revendication 1,
**caractérisée en ce que**
la courbure, ou le pli, est asymétrique le long de l'extension longitudinale de la pale (7) de rotor.

3. Eolienne à axe vertical selon la revendication 1 ou 2,
**caractérisée en ce que**
le zénith ou le point de pliage principal se situe, dans le sens vertical, au-dessus du plan du centre de gravité horizontal de la pale (7) de rotor.

4. Eolienne à axe vertical selon l'une des revendications précédentes,
**caractérisée en ce que**
la pale (7) de rotor est pliée à au moins un endroit, le long d'une perpendiculaire coupant la pale (7) de rotor, en direction de l'axe (10) de sortie de l'éolienne à axe vertical.

5. Eolienne à axe vertical selon la revendication 4,
**caractérisée en ce que**
le pli peut être modifié par une liaison de type charnière de parties de la pale (7) de rotor, et par un mécanisme de réglage.

6. Eolienne à axe vertical selon l'une des revendications 1 à 3,
**caractérisée en ce que**
la pale (7) de rotor est recourbée de manière concave dans au moins une zone partielle par rapport à l'axe (10) de sortie de l'éolienne à axe vertical.

7. Eolienne à axe vertical selon l'une des revendications précédentes,
**caractérisée en ce que**
l'angle d'attaque d'au moins une pale (7) de rotor est réglable par rapport à sa tringlerie (8) de support, au moyen d'une barre (11) de commande et de maintien.

8. Eolienne à axe vertical selon l'une des revendications précédentes,
**caractérisée en ce que**
la pale (7) de rotor est composée de manière modulaire de plusieurs parties.

9. Eolienne à axe vertical selon la revendication 8,
**caractérisée en ce que**
les parties de type modulaire consistent en des profils générateurs de portance compacts.

10. Eolienne à axe vertical selon l'une des revendications 1 à 7,
**caractérisée en ce que**
la pale (7) de rotor consiste en un longeron de support interne et en des profils générateurs de portance externes qui sont fixés à celui-ci.

11. Eolienne à axe vertical selon l'une des revendications précédentes,
**caractérisée en ce**
**qu'**elle agit sur un mécanisme de transmission à un étage.

12. Eolienne à axe vertical selon l'une des revendications précédentes,
**caractérisée en ce**
**qu'**elle agit sur un générateur sans mécanisme de transmission.
